**Europäisches Patentamt**

**European Patent Office**

**Office européen des brevets**

(11) Veröffentlichungsnummer: **0 026 378**
**B1**

(12) **EUROPÄISCHE PATENTSCHRIFT**

(45) Veröffentlichungstag der Patentschrift:
14.03.84

㉑ Anmeldenummer. 80105478.4

(22) Anmeldetag: 12.09.80

(51) Int. Cl.³: **G 09 G 1/02**, G 06 F 3/037

(54) Verfahren zur Hervorhebung eines Bildbereiches innerhalb eines Bildes, das auf einem Bildschirm dargestellt wird.

㉚ Priorität· 28.09.79 **DE 2939457**

(43) Veröffentlichungstag der Anmeldung:
**08.04.81 Patentblatt 81/14**

(45) Bekanntmachung des Hinweises auf die Patenterteilung:
**14.03.84 Patentblatt 84/11**

㊽ Ber annte Vertragsstaaten:
**FR GB**

㊾ Entgegenhaltungen
**DE - A - 2 439 053**
**DE - A - 2 606 491**
**LU - A - 60 083**

(73) Patentinhaber: **SIEMENS AKTIENGESELLSCHAFT,
Berlin und München Wittelsbacherplatz 2,
D-8000 München 2 (DE)**

(72) Erfinder: **Postl, Wolfgang, Dipl.-Ing.,
Edelweissstrasse 11, D-8131 Berg (DE)**

# Verfahren zur Hervorhebung eines Bildbereiches innerhalb eines aus einzeln ansteuerbaren Bildelementen bestehenden Bildes, das auf einem Bildschirm dargestellt wird

Die vorliegende Erfindung betrifft ein Verfahren zur Hervorhebung eines Bildbereiches innerhalb eines aus einzeln ansteuerbaren Bildelementen bestehenden Bildes, das auf einem Bildschirm dargestellt wird, wobei der Bildschirm die Bildelemente des jeweiligen Bildes in mindestens zwei Helligkeitsstufen, z. B. hell oder dunkel, darstellen kann, bei welchem Verfahren in einer ersten Darstellungsphase der Bildinhalt innerhalb des hervorzuhebenden Bildbereiches unverändert und in einer oder mehreren weiteren Darstellungsphasen verändert dargestellt wird, wobei sich diese Darstellungsphasen periodisch wiederholen, bis die Hervorhebungsform verändert wird.

Unter einem Bildbereich innerhalb eines Bildes wird hier eine bestimmte Teilmenge der Bildelemente des Bildes verstanden, beispielsweise alle Bildelemente, die sich innerhalb eines rechteckig oder sonstwie begrenzten Bildfeldes befinden oder auch eine Menge von Bildelementen, die die Grenze eines solchen Feldes markieren.

Zweck der Hervorhebung eines Bildbereiches kann beispielsweise sein:

— Markierung eines Bildelements oder eines im Bild dargestellten, aus Bildelementen zusammengesetzten Textzeichens oder der Stelle, an der ein Textzeichen eingefügt werden soll.
Eine derartige Hervorhebung wird üblicherweise als »Cursor« bezeichnet.
— Markierung der Grenzen eines Bildfeldes, das innerhalb eines Text/Bild-Bearbeitungssystems auf irgendeine Weise manipuliert, z. B. gelöscht, verschoben, vergrößert, verkleinert oder kopiert werden soll.
— Markierung von besonders qualifizierten Bildelementen, z. B. derjenigen Bildelemente, in denen sich das Bild von einem bestimmten anderen Bild unterscheidet.

Bei bekannten Verfahren wird beispielsweise auf einem Textbildschirm die Position des Zeichens, das als nächstes geschrieben werden soll, durch einen periodischen Helligkeitswechsel desjenigen Zeichens markiert, das bereits an dieser Stelle steht (ggf. ein Leerzeichen = Zwischenraum), oder durch eine blinkende oder ständig aufgehellte Rechteckfläche, die das Zeichenfeld (Zeichenabstand mal Zeichenhöhe) bedeckt, oder durch Komplementierung (Darstellung des Negativs) des Zeichenfelds. Bei Grafik-Bildschirmen, wie dem Tektronix 4014-Speicherbildschirm, wird die Position eines bestimmten Punktes, z. B. eines Punktes, zu dem von einem anderen Punkt eine Gerade gezogen werden soll, durch ein Fadenkreuz markiert, vgl. z. B. DATAMATION, February 1979, Seite 128, Inserat der Fa. Tektronix mit Abbildung des Bildschirmgerätes »Tektronix 4016-1«, oder durch die linke untere Ecke eines aufgehellten Quadratbereiches.

Beide Verfahren haben den Nachteil, daß der Cursor bei ungünstigem Hintergrund entweder wichtige Elemente des Hintergrunds undeutlich macht oder selbst im Hintergrund untergeht.

Aus DE-A-2 606 491 ist eine Textbearbeitungseinrichtung, bei der ein aus einer Mehrzahl von Zeichen gebildeter Text an einer Anzeigeeinheit dargestellt wird, bei der eine Funktionstastatur vorgesehen ist, mittels der die Zeichen und Bearbeitungsbefehle eingegeben werden, bei der eine Steuereinheit vorgesehen ist, mittels der die Bearbeitungsbefehle ausgeführt werden und bei der vorgegebene Stellen des Textes durch eine mittels einer Positionstastatur bewegbaren Positionsmarke markiert werden, bekannt. Diese Textbearbeitungseinrichtung ist durch eine Schaltstufe, die den durch die Positionsmarke auf der Anzeigeeinheit markierbaren Grenzen eines zu bearbeitenden Bereichs des Textes zugeordnete binär codierte Adressen speichert und die während der Darstellung der Zeichen dieses Bereichs an die Anzeigeeinheit ein eine besonders optische Kennzeichnung der Zeichen dieses Bereichs auslösendes Kennzeichnungssignal und gleichzeitig an die Steuereinheit ein die Ausführung eines vorgegebenen Bearbeitungsbefehls vorbereitendes Steuersignal abgibt, gekennzeichnet. In dieser bekannten Textbearbeitungseinrichtung wird durch eine Helligkeitssteuerung eine blinkende Darstellung des zu bearbeitenden Bereichs bewirkt.

Der Erfindung liegt die Aufgabe zugrunde, ein Verfahren zur Hervorhebung eines Bildbereichs innerhalb eines aus einzelnen ansteuerbaren Bildelementen bestehenden Bildes zu schaffen, bei dem einerseits die Hervorhebung unabhängig von den im Bildbereich enthaltenen Bildelementen bzw. unabhängig vom Inhalt des Bildbereiches gut erkennbar ist und bei dem andererseits auch die Erkennbarkeit des Bildinhalts innerhalb des hervorgehobenen Bildbereichs durch die Hervorhebung nicht beeinträchtigt wird.

Die der Erfindung zugrunde liegende Aufgabe wird durch das im Anspruch 1 gekennzeichnete Verfahren gelöst.

Das erfindungsgemäße Verfahren bietet den Vorteil, daß eine deutliche Hervorhebung des betreffenden Bildbereiches unter Beibehaltung einer deutlichen Erkennbarkeit des unverändernden Bildinhalts gewährleistet ist.

Weiterbildungen der Erfindung sind durch die in den Unteransprüchen angegebenen Merkmale gekennzeichnet.

Im folgenden werden der Stand der Technik und die Erfindung anhand mehrerer Figuren näher erläutert.

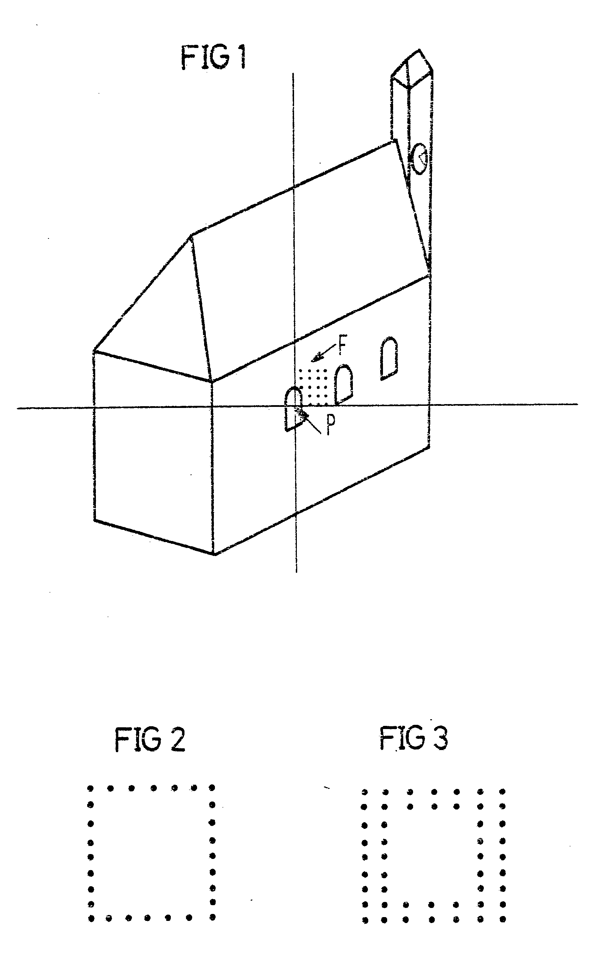

Fig. 1 zeigt ein Beispiel für die gemäß dem genannten Stand der Technik ausgeführte Realisierung eines Cursors mittels eines Fadenkreuzes sowie eines aufgehellten quadratischen Be-

reiches F, dessen Bildelemente durch Punkte P dargestellt sind;

Fig. 2 zeigt schematisch die Markierung der Grenzen eines Bildfeldes durch den hervorzuhebenden Bildbereich, wie dies bereits beim Stand der Technik üblich ist. Dieser Bildbereich umfaßt die durch Punkte gekennzeichneten Bildelemente;

Fig. 3 zeigt schematisch ein anderes Beispiel für die an sich bekannte Markierung der Grenzen eines Bildfeldes ähnlich Fig. 2;

Fig. 4 zeigt schematisch ein Beispiel für die erfindungsgemäße Cursordarstellung durch Komplementieren der Helligkeitswerte oder Bildelemente innerhalb eines bestimmten, hier pfeilförmigen Bildbereichs. Der Cursor markiert in diesem Fall den Punkt P. Es sind die aufgehellten Bildelemente durch große Punkte und die im pfeilförmigen Bildbereich enthaltenen Bildelemente durch Kreuze dargestellt. Die normal hellen Bildelemente sind, soweit sie nicht im pfeilförmigen Bildbereich liegen, durch kleine Punkte dargestellt.

Der Cursor wird deutlich erkennbar, wenn die Komplementdarstellung mit einer Periode von etwa einer halben Sekunde mit der Darstellung des unveränderten Bildes abwechselt.

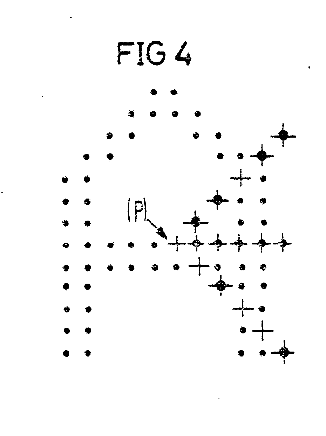

Wie bereits erläutert, zeigt Fig. 4 einen hervorzuhebenden Bildbereich, bei dem die Helligkeitswerte der Bildelemente komplementiert sind. Diese veränderte Bilddarstellung kann in einem Austausch der Helligkeitswerte der betreffenden Bildelemente mit damit korrelierten Helligkeitswerten vorgenommen. In dem gezeigten Beispiel besteht die veränderte Bilddarstellung darin, daß die Helligkeitswerte der betroffenen Bildelemente komplementiert werden.

Die Komplementierung des Helligkeitswertes eines Bildelements besteht bei einem Bildschirm, der die Darstellung des Bildelements in nur zwei Helligkeitsstufen erlaubt, darin, daß der Helligkeitswert von dem dunkleren in den helleren Zustand übergeführt wird oder umgekehrt. Bei einem Bildschirm, der die Darstellung des Helligkeitswertes in mehreren Stufen erlaubt, kann die Komplementierung durch den Austausch zweier einander zugeordneter, etwa symmetrisch bezüglich einer mittleren Helligkeitsstufe liegender Helligkeitsstufen erfolgen.

Die Erfindung sieht vor, daß die in dem hervorzuhebenden Bildbereiche enthaltenen Bildelemente innerhalb einer zweiten Darstellungsphase 2 hell und innerhalb einer dritten Darstellungsphase 3 dunkel geschaltet werden. Dabei können sich die insgesamt drei Darstellungsphasen 1, 2, 3 in folgender Reihenfolge periodisch abwechseln:

1— 2— 1— 3— 1— 2— 1— 3 . . .

Die Erfindung sieht vor, daß nach jeder Veränderung des hervorzuhebenden Bildbereiches, beispielsweise einer Veränderung der Lage, Größe oder Form des Bildbereiches, eine Ermittlung der Gesamthelligkeit eines Bezugsfeldes vorgenommen wird, das eine ausgewählte Menge von Bildelementen, z. B. von innerhalb eines Rechtecks angeordneten Bildelementen, deren Position in einer festen geometrischen Beziehung zum Bildbereich steht, insbesondere diesen überdeckt, darstellt, wobei der Bildbereich und das Bezugsfeld identisch sein können und daß daraus eine Bedingung abgeleitet wird, bei deren Erfüllung die erste und bei deren Nichterfüllung die zweite Hervorhebungsform automatisch eingeschaltet wird. Die genannte Gesamthelligkeit ergibt sich durch Addition der Helligkeitswerte der einzelnen Bildelemente des Bezugsfeldes. Sie kann, wenn deren Anzahl z ist und wenn der Helligkeitswert eines Bildelementes auf den Bereich (0,1) normiert ist, die beiden Extremwerte 0 und z annehmen. Die genannte Bedingung besteht darin, daß die Gesamthelligkeit des Bezugsfeldes größer als ein Wert $z_1$ oder kleiner als die Differenz $z - z_2$ ist, wobei $z_1$ und $z_2$ vorgegebene Werte sind und z die Anzahl der Bildelemente des Bezugsfeldes ist. Die Werte $z_1$ und $z_2$ können subjektiv durch die Bedienperson eingestellt werden. Es ist jedoch gemäß einer anderen vorteilhaften Weiterbildung der Erfindung vorgesehen, daß die Werte $z_1$ und $z_2$ durch dafür vorgesehene Funktionsgeneratoren errechnet werden, wobei die generierten Funktionen $f_1 (z, q_1)$ bzw. $f_2 (z, q_2)$ einerseits von dem Wert z und andererseits von subjektiv einstellbaren Parametern $q_1$ und $q_2$ abhängen. Vorteilhafterweise kann die Funktion $f_1 (z, q_1) = z \cdot q_1$ und die Funktion $f_2 (z, q_2) = z \cdot q_2$ gewählt werden, wobei die Parameter $q_1$, $q_2$ reelle Zahlen im Bereich von 0 bis 1 sind.

**Patentansprüche**

1. Verfahren zur Hervorhebung eines Bildbereiches innerhalb eines aus einzeln ansteuerbaren Bildelementen bestehenden Bildes, das auf einem Bildschirm dargestellt wird, wobei nach einer ersten Hervorhebungsform der Bildschirm die Bildelemente des jeweiligen Bildes in mindestens zwei Helligkeitsstufen, z. B. hell oder dunkel, darstellen kann, bei welchem Verfahren in einer ersten Darstellungsphase der Bildinhalt innerhalb des hervorzuhebenden Bildbereichs unverändert und in einer oder mehreren weiteren Darstellungsphasen verändert dargestellt wird, wobei sich diese Darstellungsphasen periodisch wiederholen, dadurch gekennzeichnet, daß eine zweite Hervorhebungsform vorgesehen ist, bei der die in dem hervorzuhebenden Bildbereich enthaltenen Bildelemente innerhalb der zweiten Darstellungsphase hell und innerhalb der dritten Darstellungsphase dunkel geschaltet werden, daß nach jeder Veränderung des hervorzuhebenden Bildbereichs eine Ermittlung der Gesamthelligkeit eines Bezugsfeldes vorgenommen wird, das eine ausgewählte Menge von Bildelementen, z. B. von innerhalb eines Rechtecks angeordneten Bildelementen, deren Position in einer festen geometrischen Beziehung zum Bildbereich steht, insbesondere diesen überdeckt, darstellt, wobei der Bildbereich und das Bezugsfeld identisch sein können und daß daraus eine Bedingung abgeleitet wird, bei deren Erfüllung die erste und bei deren Nichterfüllung die zweite Hervorhebungsform automatisch eingeschaltet wird, und daß dieses Kriterium darin besteht, daß die Gesamthelligkeit des Bezugsfeldes größer als eine Zahl $z_1$ oder kleiner als eine Differenz $z-z_2$ ist, wobei $z_1$ und $z_2$ vorgegebene Werte sind und $z$ die Anzahl der Bildelemente des Bezugsfeldes ist.

2. Verfahren nach Anspruch 1, dadurch gekennzeichnet, daß die Zahlen $z_1$ und $z_2$ subjektiv durch die Bedienperson eingestellt werden können.

3. Verfahren nach Anspruch 1, dadurch gekennzeichnet, daß die Zahlen $z_1$ und $z_2$ durch dafür vorgesehene Funktionsgeneratoren errechnet werden, wobei die generierten Funktionen $f_1$ $(z, q_1)$ bzw. $f_2$ $(z, q_2)$ einerseits von dem Wert $z$ und andererseits von subjektiv einstellbaren Parametern $q_1$ und $q_2$ abhängen.

4. Verfahren nach Anspruch 3, dadurch gekennzeichnet, daß die Funktion $f_1$ $(z, q_1) = z \cdot q_1$ und die Funktion $f_2$ $(z, q_2) = z \cdot q_2$ gewählt werden, wobei die Parameter $q_1$, $q_2$ reelle Zahlen im Bereich von 0 bis 1 sind.

## Claims

1. A process for emphasizing an image region within an image consisting of individually-controllable image elements and which is to be displayed on a screen, in which in accordance with a first emphasis form, the screen can display the image elements of the respective image in at least two degrees of brightnees, e.g. light or dark, in which process in a first display phase the image content within the image region to be emphasized is displayed in an unaltered form and is displayed in an altered form in one or more further display phases, the latter being periodically repeated, characterised in that there is provided a second emphasis form, in which the image elements included in the image region to be emphasized are switched so as to be light within the second display phase and so as to be dark within the third display phase; and that after each change of the image region to be emphasized, the overall brightness of a reference field is determined, which reference field represents a selected set of image elements, e.g. of image elements which are arranged within a rectangle and whose position has a fixed geometrical relation to the image region, in particular covers the latter, where the image region and the reference field can be identical; and that a condition is derived therefrom, in the case of the fulfilment of which the first emphasis form, and in the case of the non-fulfilment of which, the second emphasis form is automatically switched on; and that this criterion consists in that the overall brightness·of the reference field is greater than a

figure $z_1$, or smaller than a difference $z-z_2$, $z_1$ and $z_2$ being given values and $z$ being the number of image elements of the reference field.

2. A process according to Claim 1, characterised in that the figures $z_1$ and $z_2$ can be subjectively set by the operator.

3. A process according to Claim 1, characterised in that the figures $z_1$ and $z_2$ are calculated by function generators provided therefor, the generated functions $f_1$ $(z, q_1)$, or $f_2$ $(z, q_2)$, as the case may be, being dependent upon the value $z$, on the one hand, and upon subjectively adjustable parameters $q_1$ and $q_2$, on the other hand.

4. A process according to Claim 3, characterised in that the function $f_1$ $(z, q_1) = z \cdot q_1$ and the function $f_2$ $(z, q_2) = z \cdot q_2$, the parameters $q_1$, $q_2$ being real numbers in the range from 0 to 1.

## Revendications

1. Procédé pour accentuer une zone d'image à l'intérieur d'une image constituée par des éléments d'image pouvant être sélectionnés séparément et qui est représentée sur un écran, ce dernier pouvant représenter les éléments de l'image concernée selon au moins deux échelons de brillance, par exemple clair et sombre, et selon lequel le contenu situé à l'intérieur de la zone d'image devant être accentuée, est représentée sans modification au cours d'une première phase de représentation, et en étant modifiée au cours d'une ou de plusieurs autres phases de réprésentation, ces phases de réprésentation se répétant périodiquement, caractérisé par le fait qu'il est prévu une seconde forme d'accentuation, pour laquelle les éléments d'image contenus dans la zone d'image devant être accentuee sont éclaircis pendant la seconde phase de représentation et sont assombris pendant la troisième phase de représentation, qu'après chaque modification de la zone d'image devant être accentuée, se trouve réalisée une détermination de la brillance totale d'un champ de référence, qui représente une quantité sélectionnée d'éléments d'image, par exemple d'éléments d'image situés à l'intérieur d'un carré et dont la position est en rapport géométrique fixe avec la zone d'image, notamment recouvre cette dernière, la zone d'image et le champ de référence pouvant être identiques, et qu'à partir de la est dérivée une condition selon laquelle la première forme d'accentuation, lorsque cette condition est satisfaite, et la seconde forme d'accentuation, lorsque cette condition n'est pas satisfaite, est introduite automatiquement, et que ce critère, consiste en ce que la brillance totale du champ de référence est supérieure à un nombre $z_1$ ou est inférieure à une différence $z-z_2$, $z_1$ et $z_2$ étant des valeurs prédéterminées et $z$ étant le nombre des éléments d'image du champ de référence.

2. Procédé suivant la revendication 1, caractérisé par le fait que les nombres $z_1$ et $z_2$ peuvent être réglés subjectivement par l'opérateur.

3. Procédé suivant la revendication 1, caractérisé par le fait que les nombres $z_1$ et $z_2$ sont calculés par des générateurs de fonction prévus à cet effet, les fonctions générées $f_1(z, q_1)$ et $f_2(z, q_2)$ dépendant d'une part de la valeur $z$ et d'autre part de paramètres $q_1$ et $q_2$ pouvant être réglés de façon subjective.

4. Procédé suivant la revendication 3, caractérisé par le fait que l'on choisit la fonction $f_1(z, q_1) = z \cdot q_1$ et la fonction $f_2(z, q_2) = z \cdot q_2$, les paramètres $q_1$, $q_2$ étant des nombres réels dans la plage allant de 0 à 1.

# FIG 1

# FIG 2

# FIG 3

# FIG 4